# DEMANDE DE BREVET EUROPEEN

(11) **EP 3 417 913 A1**
(43) Date de publication de la demande: **26.12.2018**
(21) Numéro de dépôt: 18177524.8
(22) Date de dépôt: 13.06.2018
(51) Int. Cl.: A62B 7/14, A62B 25/00, A62B 27/00

(54) **EQUIPEMENT RESPIRATOIRE POUR AERONEF AVEC MASQUE ET HARNAIS GONFLABLE ET SON ESPACE DE RANGEMENT**

(30) Priorité: 16.06.2017 FR 1755521
(71) Demandeur: Zodiac Aerotechnics, 78370 Plaisir (FR)
(72) Inventeur: SIBUET, Jean-Philippe, 78480 VERNEUIL SUR SEINE (FR); POTET, Olivier, 91620 LA VILLE DU BOIS (FR)
(74) Mandataire: Cabinet Plasseraud

(57) **Abrégé**

Equipement respiratoire (1) pour aéronef, comprenant un masque respiratoire à régulateur (10), un harnais gonflable (20) configuré pour être raccordé à une source de gaz sous pression, et adapté pour maintenir le masque respiratoire sur l'utilisateur (U), un tuyau souple (2) d'alimentation en gaz raccordé au masque respiratoire (10) pour alimenter le masque respiratoire depuis une alimentation de gaz respirable, un espace de rangement (30) comprenant un logement (32) adapté pour loger le masque respiratoire (10) et le harnais gonflable dans une position de stockage, dans lequel l'équipement respiratoire comprend un élément d'interface (4), relié au harnais gonflable, configuré pour coopérer avec une vanne pneumatique (V) agissant sélectivement sur l'alimentation de gaz respirable et configuré pour être retenu de manière détachable par au moins un élément de rétention (9), et l'élément d'interface (4) étant déplaçable entre une position de test (*P1*) dans laquelle l'élément d'interface (4) est sollicité par un effort et la vanne pneumatique cause une ouverture de l'alimentation de gaz respirable vers le tuyau souple, et une position normale de rangement (*P2*), dans laquelle la vanne pneumatique empêche la circulation du gaz respiratoire.

## Description

### Domaine de l'invention

L'invention concerne un équipement respiratoire pour fournir un gaz respiratoire à un membre d'équipage d'un aéronef.

L'invention concerne en particulier un équipement respiratoire prévu pour être utilisé notamment par le pilote ou le copilote notamment en cas de dépressurisation du cockpit au-dessus d'une certaine altitude au-dessus de laquelle la concentration en oxygène dans l'air extérieur n'est pas suffisante pour l'organisme humain. L'équipement respiratoire peut être porté préventivement à certaines altitudes élevées ou encore en cas de présence de fumées.

L'invention concerne en outre un procédé caractérisant le fonctionnement de l'équipement respiratoire en question et son installation sur le visage du pilote ou du copilote.

### Contexte de l'invention

Les aéronefs qui volent au-dessus d'une certaine altitude requièrent soit un système de pressurisation de la cabine comme dans le cas des avions commerciaux, soit une fourniture de gaz respirable (notamment oxygène) aux membres d'équipage comme dans le cas d'avions militaires ou utilitaires non pressurisés.

Dans les deux cas, il est prévu un équipement respiratoire spécifique au moins pour le pilote et pour le copilote pour fournir à l'aide d'un masque respiratoire un gaz respiratoire à ces personnes et plus généralement à tout membre d'équipage en cockpit.

Le masque respiratoire peut être porté en mode préventif dans un avion de ligne pourvu de pressurisation mais qui vole à une altitude supérieure à 40 000 pieds où le port préventif est recommandé (ou suivant d'autres prescriptions conditionnelles), et enfin le masque respiratoire peut être porté en mode événementiel suite à un incident sur le système de pressurisation de l'aéronef, ou en cas de présence de fumée(s) dans le cockpit.

Dans le cas du port en mode événementiel, en cas d'un incident de dépressurisation brutale de la cabine et/ou du cockpit, le pilote ou le copilote doit pouvoir installer le masque respiratoire et respirer du gaz respirable en moins de cinq secondes, et il doit être possible d'utiliser une seule main pour ladite manoeuvre complète d'installation, l'autre main étant mobilisée à d'autres tâches, notamment des tâches de pilotage des commandes de vol de l'aéronef.

En d'autres termes, en cas de dépressurisation, l'utilisateur de l'équipement d'urgence, qui est habituellement le pilote ou le co-pilote, doit très rapidement attraper le masque respiratoire qui est situé dans un espace de rangement à sa portée immédiate, et le placer ensuite autour de sa tête afin de pouvoir respirer au travers du masque respiratoire lui fournissant ainsi du gaz respiratoire.

Le masque respiratoire à régulateur comprend un couvre-face oronasal, adapté pour s'appliquer sur le visage du membre d'équipage, autour de la bouche et du nez et pour délivrer du gaz respirable, de préférence à la demande. Le masque respiratoire comprend également un harnais gonflable. Ce harnais gonflable permet de maintenir le couvre-face oronasal sur le visage du membre d'équipage. Le masque respiratoire peut comprendre en outre un écran de protection (intégré ou comme pièce distincte) qui permet de protéger les yeux de l'utilisateur contre les éventuelles projections, et aussi en particulier de la fumée.

Par ailleurs, les procédures de vérification du bon fonctionnement des équipements de l'aéronef ('check-lists') préalables à une autorisation de décollage incluent une procédure de vérification de la disponibilité et du bon fonctionnement de l'équipement destiné à fournir du gaz respiratoire en cas de besoin en cockpit. Cette procédure, souvent appelée *'press to test'* comprend une mise en pression du masque régulateur et simultanément une mise en débit du régulateur.

Ce test de vérification *'Press to test'* utilise habituellement au moins un bouton qu'il faut solliciter (sur lequel il faut appuyer par exemple) et un témoin visuel de débit permet de matérialiser la disponibilité d'un flux d'oxygène jusqu'au couvre-face oronasal pendant le test.

Par ailleurs, dans les aéronefs (avions ou hélicoptères), l'espace de rangement formé par un boitier dans lequel est rangé le masque respiratoire en cas de non utilisation, n'est pas très volumineux et le harnais gonflable doit être replié sur lui-même pour que le masque et le harnais puissent rentrer correctement ensemble dans cet espace.

Lorsqu'une condition d'urgence est détectée, l'utilisateur a moins de 5 secondes pour attraper le masque en seule main et le positionner sur son visage. Il est donc obligatoire que le harnais soit rapidement et totalement déployé lorsqu'il est sorti de son espace de rangement.

Afin de garantir un déploiement correct du harnais du masque respiratoire, il est tout aussi important que le masque respiratoire soit rangé de façon appropriée dans l'espace de rangement. Cette opération de rangement peut être délicate et peu intuitive. Si le rangement est conforme aux préconisations, alors le déploiement du harnais ne pose pas de problème, mais si le rangement est incorrect, le déploiement ultérieur du harnais peut s'avérer plus long que prévu.

On ne peut pas garantir que le rangement est toujours conforme aux préconisations car cette opération de rangement est effectuée manuellement et donc fortement dépendante du facteur humain et du niveau de formation prodiguée par les compagnies aériennes et les documents de maintenance mis à disposition des opérateurs.

Il est donc apparu un besoin d'améliorer les solutions qui permettent à la fois de procéder au test de bon fonctionnement oxygène préalable au départ du vol et qui permettent d'assurer un déploiement sans encombre du harnais lorsqu'un membre d'équipage sort en urgence le masque respiratoire de l'espace de rangement.

On notera que l'homme de l'art désigne communément par « *oxygène* » le gaz respiratoire mentionné dans le présent document.

### Exposé de l'invention

A cet effet, l'invention concerne un équipement respiratoire pour aéronef, comprenant:
- un masque respiratoire à régulateur adapté pour être appliqué, dans une position d'utilisation, autour d'un nez et d'une bouche d'un utilisateur,
- un harnais gonflable configuré pour être raccordé à une source de gaz sous pression (cette source de pression sert aussi le plus souvent à la respiration à régulation mais il peut en être autrement), et adapté pour maintenir le masque respiratoire sur l'utilisateur,
- un tuyau souple d'alimentation en gaz raccordé au masque respiratoire au niveau d'une extrémité aval pour alimenter le masque respiratoire depuis une alimentation en gaz respirable,
- un espace de rangement comprenant un logement adapté pour loger/héberger au moins le masque respiratoire et le harnais gonflable dans une position de stockage et présentant une ouverture d'accès, le masque respiratoire étant à distance du logement dans la position d'utilisation,
l'équipement respiratoire comprenant un élément d'interface relié au harnais gonflable, l'élément d'interface étant configuré pour coopérer avec une vanne pneumatique (V) agissant sélectivement sur l'alimentation en gaz respirable en amont du tuyau souple et l'élément d'interface étant configuré pour être retenu de manière détachable par au moins un élément de rétention,
et dans lequel l'élément d'interface est déplaçable, tout en restant retenu par l'élément de rétention, entre d'une part une position de test dans laquelle l'élément d'interface est sollicité par un effort exercé directement par un doigt de l'utilisateur et la vanne pneumatique ouvre l'alimentation de gaz respirable vers le tuyau souple, et d'autre part une position normale de rangement, obtenue en l'absence d'effort exercé par l'utilisateur, dans laquelle la vanne pneumatique empêche la circulation du gaz respiratoire.

Grâce à ces dispositions, la coopération entre l'élément d'interface relié au harnais gonflable et la vanne pneumatique agencée sur la fourniture de gaz permet de vérifier, via le test de disponibilité de l'oxygène, lors de la procédure préalable à une autorisation de décollage que l'élément d'interface est bien en position correcte dans l'élément de rétention, ce qui permet de fiabiliser une étape ultérieure de sortie du masque respiratoire et de déploiement du harnais.

Moyennant quoi, la seule possibilité pour réaliser correctement de test PTT oxygène obligatoire est de solliciter l'élément d'interface et de constater positivement un retour correct, notamment via un témoin visuel et un feed-back auditif (flux oxygène et système audio), l'élément d'interface en position adéquate garantira un déploiement ultérieur du harnais dans des conditions optimisées.

Dans divers modes de réalisation de l'ensemble selon l'invention, on peut également avoir recours en outre à l'une et/ou à l'autre des dispositions qui suivent.

Selon une configuration, lorsque l'élément d'interface (4) est ôté d'une position de rétention (PR) où l'élément d'interface est normalement maintenu par l'élément de rétention (9) dans la position de rangement (P2) ou la position de test (P1), alors la vanne pneumatique cause une ouverture du passage de la source de gaz sous pression vers le harnais gonflable et/ou accessoirement cause une ouverture de l'alimentation de gaz respirable vers le tuyau souple.

Moyennant quoi, la fourniture de gaz sous pression pour le gonflage du harnais n'est possible que lorsque l'élément d'interface se détache alors que le masque respiratoire est déjà sorti du logement et que le harnais est déplié, au moins en partie du fait de la rétention procurée par l'élément d'interface avant son détachement. On évite ainsi qu'un gonflage trop précoce du harnais ne rende difficile son déploiement si préalablement il avait été replié dans la lunette ou à l'intérieur du joint du masque oronasal.

Suivant la configuration pneumatique, la fourniture de gaz respirable vers le masque peut également être conditionnée au détachement de l'élément d'interface et la fourniture de gaz respirable vers le masque ne se produit alors que lorsque le masque respiratoire est déjà sorti du logement et que le harnais est déplié, mais toutefois avant que l'utilisateur n'ait réellement appliqué le masque sur le visage.

Autrement dit, on diffère la fourniture de gaz dans le tuyau souple pour différer le gonflage du harnais même si les oreilles de préhension du régulateur sont déjà sollicitées par l'utilisateur.

Selon une configuration, la source de gaz sous pression du harnais gonflable est formée par l'alimentation en gaz respirable amené par le tuyau souple.
Il n'y a donc qu'une seule conduite pneumatique multifonction pour la respiration et le gonflage du harnais. Dans ces conditions, on remarque que le détachement de l'élément d'interface provoque la fourniture de gaz vers le masque (ouverture de la vanne), la fourniture de gaz respirable au régulateur du masque et, suivant l'activation des leviers/oreilles de préhension, le gonflage du harnais.

Selon une configuration, la vanne pneumatique fait partie d'un distributeur relié au tube d'alimentation en gaz et l'élément d'interface est configuré pour coopérer avec un piston dudit distributeur.

L'utilisation d'un tel distributeur pneumatique permet à la fois de gérer la procédure Press-To-Test oxygène et la fourniture retardée du gaz respirable à destination du masque respiratoire (pour gonflage différée).

Selon une autre configuration, la vanne pneumatique commande un distributeur auxiliaire distinct. Le distributeur auxiliaire peut être situé à distance et relié à la vanne pneumatique par un tuyau, ou bien le distributeur auxiliaire peut être situé à proximité de la vanne pneumatique.

Selon une configuration, l'élément d'interface peut comprendre une zone de coopération avec l'élément de rétention, par exemple une fonction de clipsage, ce qui assure un maintien de l'élément d'interface tant que l'effort de traction reste inférieur à un certain seuil, et l'élément d'interface peut comprendre une forme de coopération avec le piston dudit distributeur pour maintenir ce dernier poussé à l'encontre d'un élément de rappel élastique.

Ainsi, l'élément d'interface peut être formé par une pièce relativement simple, de préférence monolithique.

Selon une configuration, le piston du distributeur est déplaçable selon un axe longitudinal entre une première position dite position de test correspondant à la position de test de l'élément d'interface (élément d'interface sollicité/poussé par une action manuelle à l'encontre de rappel élastique), une deuxième position dite de circuit fermé correspondant à la position normale de rangement de l'élément d'interface (piston repoussé par l'élément d'interface, à l'encontre de rappel élastique), et une troisième position dite de circuit établi correspondant à la position otée de l'élément d'interface (alimentation normale). De préférence, la deuxième position se situe entre la première position et la troisième position.

Grâce à une série de joint toriques agencés sur le piston distributeur, on fait en sorte que la première position et la troisième position permette d'établir un même circuit pneumatique ouvert, alors que la deuxième position établie un circuit pneumatique fermé.

Selon une configuration, le piston du distributeur est déplaçable selon un axe longitudinal entre une première position dite position de test (élément d'interface sollicité/poussé par une action manuelle correspondant à la position de test de l'élément d'interface (position PTT), qui sert aussi de position de circuit établi correspondant à une position ôtée de l'élément d'interface (alimentation normale), et une deuxième position dite de circuit fermé, correspondant à la position normale de rangement de l'élément d'interface (piston repoussé par l'élément d'interface, à rencontre d'un rappel élastique).

Avec seulement deux positions du point de vue pneumatique, l'identité entre la position de test et la position de circuit établi augmente le taux de couverture du test *Press-To-Test* oxygène car le système pneumatique se retrouve exactement dans la même configuration.

Selon une configuration, le piston est sollicité au moins vers la deuxième position, soit par un élément élastique, soit par la pression du gaz respiratoire. Une telle solution présente une simplicité du montage et un tel rappel passif assure une fiabilité élevée.

Selon une configuration, l'élément d'interface, lorsqu'il est en position dans l'élément de rétention, est visible de l'extérieur de l'espace de rangement. Le pilote ou le copilote peut ainsi vérifier visuellement la présence de l'élément d'interface ce qui participe à la procédure de test préalable au vol.

Selon une configuration, l'élément d'interface, lorsqu'il est en position dans l'élément de rétention, est accessible par un ou plusieurs doigts de l'utilisateur. Le pilote ou le copilote peut ainsi solliciter l'élément d'interface pour procéder à la procédure de test préalable au vol.

Selon une configuration, l'équipement respiratoire peut comprendre en outre au moins une porte mobile entre une position fermée dans laquelle elle obture au moins partiellement l'ouverture d'accès et une position ouverte dans laquelle elle est à l'écart de l'ouverture d'accès, et l'élément d'interface, lorsqu'il est en position dans l'élément de rétention, est accessible à une manoeuvre manuelle de l'utilisateur depuis l'extérieur de la zone de stockage, lorsque la porte est en position fermée. Le test oxygène peut être réalisé dans la position normale de rangement porte(s) fermée(s).

Selon une configuration, la liaison mécanique entre l'élément de rétention et l'élément d'interface est une liaison à effet rotule. La traction nécessaire pour ôter l'élément d'interface de son emprise dans l'élément de rétention est homogène dans un cône d'activation au moins pour un angle solide prédéfini.

Selon une configuration, le distributeur pneumatique se trouve dans la zone médiane d'une des parois du logement, de préférence dans le prolongement de la position de l'élément d'interface lorsque celui-ci est en position dans l'élément de rétention. On obtient ainsi une simplicité du montage et une facilité d'intégration dans la boîte de rangement.

Selon une configuration, l'élément d'interface est relié de manière non démontable sur la partie postérieure inférieure du harnais, de préférence au moyen d'un lien souple et court. L'élément d'interface et le lien souple sont embarqués avec le harnais mais ne sont pas substantiellement gênant pour l'utilisateur ou le membre d'équipage utilisant masque respiratoire.

Selon une configuration, la longueur du lien souple est inférieure à 10 cm, de préférence inférieure à 7 cm, et de manière encore plus préférentielle inférieure à 5 cm.

L'élément de rétention peut être attaché dans le logement. On obtient ainsi une simplicité et fiabilité du montage mécanique.

La vanne pneumatique (V) peut être agencée dans le logement.

Dans cette configuration on note que la vanne pneumatique n'est pas sur le masque, elle n'est pas non plus à l'extérieur du logement.

### Brève description des figures

D'autres caractéristiques et avantages de la présente invention apparaîtrons dans la description détaillée suivante, se référant aux dessins annexés dans lesquels :
- la figure 1 est une vue d'ensemble d'un espace de rangement comprenant le masque respiratoire et le harnais gonflable selon un premier mode de réalisation,
- la figure 1B montre une vue d'ensemble en perspective avec le masque respiratoire ôté du logement,
- la figure 2 est une vue d'ensemble du masque respiratoire et du harnais gonflable dans la position d'utilisation sur un membre d'équipage,
- les figures 3A, 3B et 3C illustrent schématiquement un distributeur pneumatique, un élément d'interface et un élément de rétention conforme au premier mode de réalisation
- la figure 4 illustre l'équipement respiratoire dans son état rangé dans l'espace de rangement,
- la figure 5 illustre l'équipement respiratoire en cours de déploiement juste avant son utilisation,
- les figures 6A, 6B et 6C illustrent schématiquement, de manière analogue figure 3A-3C, un deuxième mode de réalisation,
- les figures 7A, 7B et 7C illustrent schématiquement, de manière analogue figure 3A-3C, un troisième mode de réalisation,
- la figure 8 montre un chronogramme qui illustre le retard obtenu au gonflage du harnais.

### Description détaillée de l'invention.

Sur les différentes figures, les mêmes références désignent des éléments identiques ou similaires. Pour des raisons de clarté de l'exposé, certaines éléments ne sont pas nécessairement représentés à l'échelle.

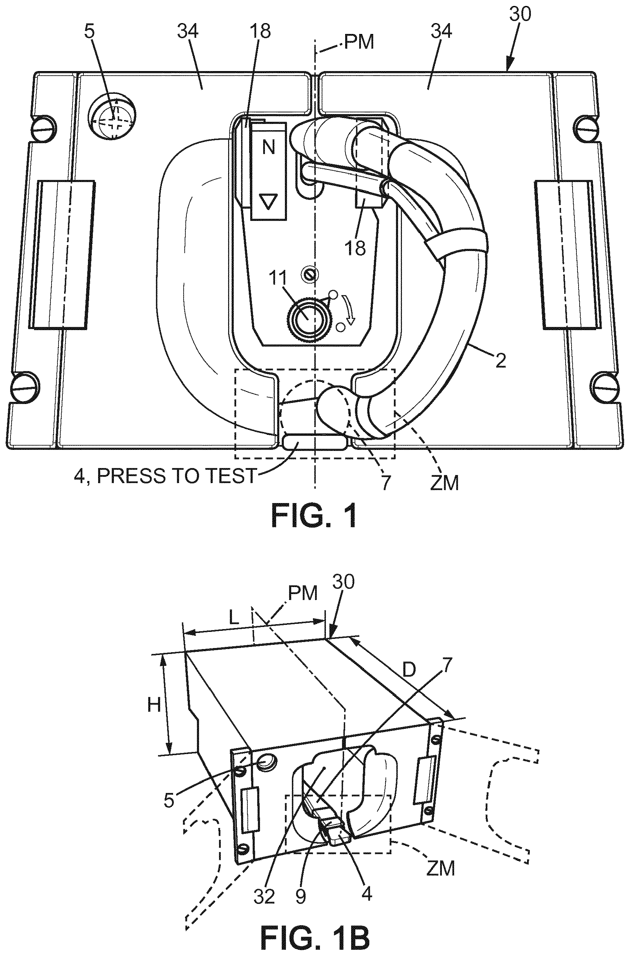

La figure 1 illustre une vue d'ensemble d'un espace de rangement **30** contenant un masque respiratoire **10** et son harnais gonflable **20**, ces éléments forment ensemble un équipement respiratoire **1** pour aéronef.

Dans l'exemple illustré, l'espace de rangement **30** est une boite substantiellement parallélépipédique dont les dimensions sont contraintes par un quasi standard.

L'espace de rangement 30 peut présenter des dimensions suivantes : la largeur **L** peut être comprise entre 150 mm et 200 mm ; la hauteur **H** peut être comprise entre 100 mm et 150 mm ; la profondeur **D** peut être comprise entre 200 mm et 280 mm. Un exemple particulier parmi d'autres peut être : largeur=170mm, hauteur=122mm, profondeur=220mm.

Dans l'exemple illustré, il y a deux portes **34** fermant l'accès d'un logement **32** dans lequel est rangé le masque respiratoire et son harnais gonflable. Un plan médian PM sépare les parties gauche et droite du logement.

Les portes protègent le masque respiratoire en position rangée, toutefois on note que la présence des portes n'est pas essentielle, dans certaines configurations, l'espace de rangement sera dépourvu de porte. Il peut s'agir d'une cuvette de réception de masque appelé dans le métier « cup ».

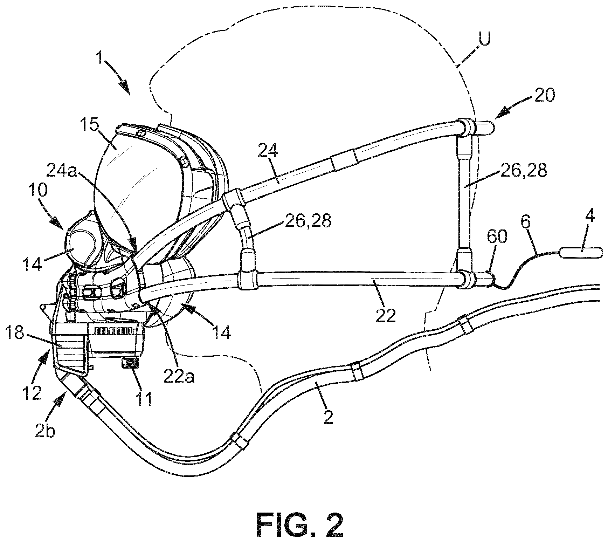

Comme illustré aux figures 2, 4 et 5, le masque respiratoire **10** comporte un bloc-régulateur **12** et un couvre-face oro-nasal **14** solidaire du bloc-régulateur **12**.

Le masque respiratoire **10** peut comprendre également un écran protection **15**, intégré ou comme pièce distincte rapportée. L'écran de protection 15 permet de protéger les yeux de l'utilisateur contre la présence de fumée.

Le couvre-face oronasal **14** peut être du type connu sous le vocable «fullface» avec l'écran de protection intégré et indissociable.

Le bloc-régulateur **12** est équipé d'interfaces de raccordements pneumatiques qui seront détaillés plus loin.

Par *'gaz respirable',* il faut comprendre un gaz ou mélange de gaz comprenant suffisamment d'oxygène pour éviter un état d'hypoxie de l'utilisateur.

Un tuyau pneumatique souple **2** relie le bloc régulateur à une source de gaz respirable **3** via un équipement de type robinet/vanne/distributeur qui va être détaillé plus loin. Plus précisément, une première extrémité **2a** du tuyau souple est fixée à un robinet/vanne/distributeur pneumatique agencé à l'intérieur ou à proximité de l'espace de rangement **30** et une deuxième extrémité **2b** connectée fluidiquement au bloc régulateur **12**. Le bloc-régulateur met le tuyau souple **2** en liaison (i.e. en communication fluide) avec le régulateur à la demande proprement dit.

Le harnais gonflable **20** comprend des sangles **22,24** destinées à appliquer le masque et son couvre-face **14** contre le visage et sont raccordées au bloc-régulateur **12**. Le bloc-régulateur **12** contient un régulateur à la demande, qui délivre de l'oxygène dilué ou pur, selon un mode dit « à la demande » commandé par exemple par la dépression générée par la respiration de l'utilisateur **U**.

Le bloc-régulateur peut comprendre éventuellement un microphone, pour la fonction communication audio. Il faut noter que dans ce cas le tuyau souple **2** peut être accompagné de conducteurs électriques contribuant à la fonction de communication audio et radio. Il peut y avoir un bouton de sélection ou de réglage **11** sur le bloc régulateur, comme connu en soi.

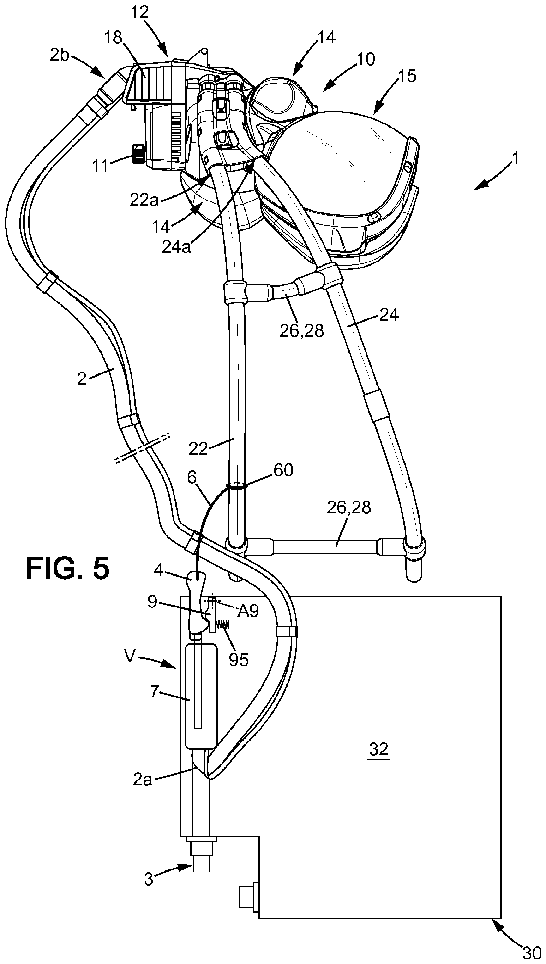

Le harnais **20** comprend un dispositif élastique tubulaire. Le dispositif élastique tubulaire forme au moins une boucle adaptée pour s'étendre autour de la tête d'un utilisateur, selon sa circonférence. Dans le mode de réalisation illustré aux figures 2 et 5, le harnais **20** forme deux boucles **22,24.** Les deux boucles **22,24** sont maintenues espacées par des éléments d'espacement flexible **26,28.** Les éléments flexibles **26,28** s'étendent transversalement entre les deux boucles 22,24. En d'autres termes, les éléments flexibles **26,28** s'étendent globalement à la verticale lorsque le masque respiratoire **10** est en condition d'utilisation (Fig 2).

Le principe d'un tel harnais gonflable est connu depuis longtemps, il est par exemple illustré dans les documents US3599636 ou EP0288391*.*

Par exemple, chacune des sangles **22,24** est constituée d'un tube interne en matériau élastique contenu dans une gaine inextensible limitant l'allongement du tube. La longueur au repos des tubes internes est telle qu'ils tendent à appliquer le couvre-face **14** sur le visage avec une pression suffisante pour assurer l'étanchéité requise, quel que soit la pression extérieure.

Mais l'invention serait également applicable à un harnais comportant une ou plusieurs bandes inextensibles, et un système à déformation pour permettre le passage aisé de la tête.

Le bloc-régulateur **12** est muni d'un embout de raccordement de la conduite souple **2** d'amenée de gaz respiratoire sous pression, et un ou deux embouts **22a, 24a** de raccordement des tubes extensibles des sangles.

De plus, le bloc régulateur comporte des moyens à commande manuelle de gonflage du harnais, constitués par un robinet interne (non visible aux figures) agencé dans le bloc régulateur **12** prévu pour être actionné par pincement manuel de deux oreilles **18**, dont l'une au moins est basculante, par exemple entre le pouce et l'index de l'utilisateur.

Lorsque les deux oreilles **18** ne sont pas pincées, le robinet est au repos, il met en communication un volume intérieur du bloc régulateur avec l'atmosphère, en vue de permettre aux sangles du harnais de se rétracter, (et de serrer la tête de l'utilisateur si le harnais est sur la tête).

Inversement, lorsque le robinet est actionné (c'est-à-dire lorsque l'utilisateur pince les oreilles **18**), les sangles du harnais admettent du gaz sous pression en provenance du tuyau d'alimentation **2** dans le volume interne, le harnais s'expanse ce qui permet de l'installer autour de la tête ou respectivement de l'ôter, de manière aisée même en cas de port de lunettes et/ou de présence de boucles d'oreilles.

Avantageusement selon la présente invention, il est prévu un élément d'interface **4** relié au harnais gonflable **20**.

Dans le contexte du présent document, l'élément d'interface **4** peut aussi être appelé « *clip ».*

Dans l'exemple illustré, la liaison mécanique entre le harnais gonflable et l'élément d'interface **4** est faite au moyen d'un lien souple et court **6**. Toutefois, dans d'autres variantes, le lien pourrait être semi rigide voire absent (liaison directe sans lien souple).

La longueur du lien 6 est inférieure à 10 cm, de préférence inférieure à 7 cm, et de manière encore plus préférentielle inférieure à 5 cm.

Le lien 6 n'est pas substantiellement extensible sa longueur varie peu même sous traction normale pour détacher l'élément d'interface 4.

Dans une configuration particulière et avantageuse, le lien souple **6** est attaché au harnais gonflable dans la partie postérieure et inférieure, à savoir en zone médiane de la sangle inférieure **22** (voir figure 2). Le lien souple peut être fixé au tube inférieur soit par une pince **60** rigide, soit par une boucle fermée cousue, soit par tout autre moyen non détachable.

L'élément d'interface **4** peut se trouver dans au moins trois configurations fonctionnelles différentes. L'une d'elles a déjà été abordée, il s'agit de la situation où le harnais gonflable est sur la tête de l'utilisateur et donc l'élément d'interface 4 est suspendu à l'extrémité libre du lien souple 6 sans fonction particulière à cet endroit ; on prévoit toutefois que la présence de cet élément d'interface ne soit pas trop gênante pour l'occiput ou le cou de l'utilisateur.

Dans deux autres configurations d'intérêt, l'élément d'interface se retrouve prisonnier d'un élément de rétention **9** agencé dans l'espace de rangement, dans une position de rétention notée **PR**.

Plus précisément, comme illustré à la figure 1, l'élément d'interface **4** est disposé sur la façade, en partie basse entre les deux portes, dans une zone notée **ZM** aux figures. L'élément d'interface **4** est disponible, en accès visuel et tactile, pour qu'un membre d'équipage le sollicite en vue de faire un test de disponibilité oxygène appelé « Press To test».

Ce test consiste à faire circuler de l'oxygène (du gaz respirable) jusqu'au bloc régulateur, à matérialiser le bruit produit par le flux d'oxygène au niveau du masque, sur sollicitation d'un bouton de test agencé sur le bloc régulateur

Il est prévu un témoin visuel de bon fonctionnement **5** impliqué dans le test de disponibilité oxygène, ce témoin visuel peut être localisé sur la face avant de l'espace de rangement, le cas échéant sur une porte. Selon un exemple de réalisation on utilise un diaphragme fendu qui s'ouvre sous l'effet d'un passage de gaz et provoque un contraste visuel.

Comme il sera vu plus loin, l'élément d'interface **4** est utilisé non seulement comme élément essentiel pour pouvoir procéder au test de disponibilité oxygène mais aussi pour contribuer au bon déploiement du harnais gonflable lorsque le masque et le harnais doivent être sortis de l'espace de rangement.

Dans l'équipement respiratoire, l'élément d'interface **4** est configuré pour coopérer avec une vanne pneumatique **V** agissant sélectivement sur l'alimentation de gaz respirable en amont du tuyau souple **2**.

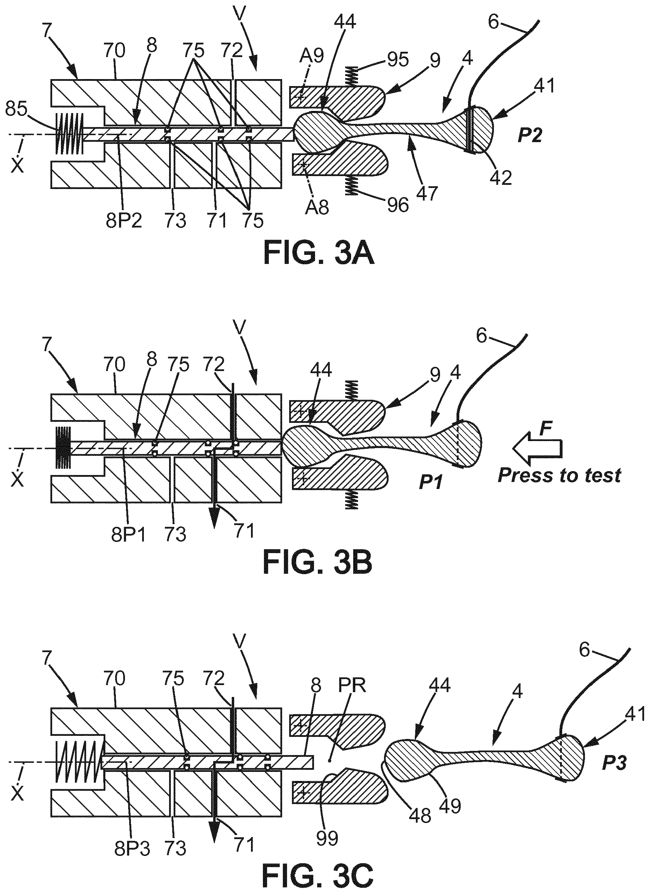

L'élément d'interface **4** est déplaçable, tout en restant retenu par l'élément de rétention **9**, entre d'une part une position normale de rangement (Fig 3A, P2), obtenue en l'absence d'effort exercé par l'utilisateur, dans laquelle la vanne pneumatique empêche la circulation du gaz respiratoire vers le tuyau souple **2** et d'autre part une position de test (Fig 3B, P1) dans laquelle l'élément d'interface **4** est sollicité par un effort **F** exercé directement par un doigt de l'utilisateur et la vanne pneumatique **V** cause une ouverture l'alimentation de gaz respirable vers le tuyau souple.

Selon le premier mode de réalisation (Fig 3A-3C), la vanne pneumatique (notée génériquement **V**) est formée comme un distributeur pneumatique **7**.

Le distributeur **7** comprend un corps **70**, un piston **8** (noyau), des orifices **71 72 73**. Un des orifices **71** est relié au tuyau de gaz respirable **2** vers le masque. Un autre orifice **72** est relié à la source d'alimentation en gaz respirable ; le troisième orifice **73** est relié à l'air libre (de façon à pourvoir purger le contenu du tuyau souple **2** avant ou pendant le rangement du masque dans le logement).

L'élément d'interface **4** coopère mécaniquement avec le piston **8**, lequel peut être déplacé le long de l'axe **X**.

La position **P1** de l'élément d'interface correspond à la position **8P1** du piston, la position **P2** de l'élément d'interface correspond à la position **8P2** du piston, et la position **P3** de l'élément d'interface correspond à la position **8P3** du piston.

Des joints toriques **75**, agencés dans des gorges du piston **8** et déplacés avec le piston, sont interposés sans jeu entre le corps **70** du distributeur et le piston **8**. Ces joints toriques, avec le passage généralement laissé entre le piston et le corps, permettent de définir sélectivement, en fonction de la position du piston 8, et via les orifices (71,72,73), un circuit pneumatique sélectif entre la source de gaz respirable **3** et le tuyau souple **2** comme illustré par les trajets fléchés aux figures 3A-3C, 6A-6C, 7A-7C.

Le piston **8** est rappelé, à l'encontre de l'action exercé par l'élément d'interface **4,** par un ressort **85**, qui peut être un ressort conventionnel comme illustré schématiquement aux figures, ou bien un ressort pneumatique utilisant du gaz sous pression, par exemple le gaz respirable ou une autre source.

On remarque que le test de disponibilité oxygène ne peut pas être effectué si l'élément d'interface **4** n'est pas présent dans sa position de rétention **PR**. Ainsi, l'autorisation de départ du vol ne peut être obtenue que si l'élément d'interface est bien dans la position adéquate, ce qui permet de garantir un déploiement optimisé du harnais gonflable en cas de besoin.

L'élément d'interface **4** se présente dans l'exemple illustré comme une pièce moulée en matière plastique qui comprend une tête **44**, un tronc **47** et une zone de préhension **41** plus large (on pourra appeler la zone de préhension **41** la « *queue* » de l'élément d'interface 4).

La tête comprend une forme frontale **48** configurée pour pousser le piston, la tête comprend une partie arrière **49** dont la forme permet une rétention dans l'élément de rétention **9**.

Il peut être prévu une rampe **99** dans l'élément de rétention **9** pour ajuster l'effort d'échappement de l'élément d'interface **4**.

La zone de préhension **41** comprend dans l'exemple illustré un orifice **42** traversant qui permet d'y passer un élément pour la fixation du lien souple **6**; selon un exemple, c'est le lien souple qui passe au travers de l'orifice et qui y est immobilisé par un élément d'arrêt de chacun des côtés ; bien entendu d'autres solutions sont possibles pour la fixation du lien souple **6** sur la zone de préhension sur le tronc de l'élément d'interface **4**.

La zone de préhension **41** peut présenter une zone générale plate et large qui s'avère pratique pour pouvoir saisir l'élément d'interface entre le pouce et l'index d'un utilisateur.

S'agissant de l'élément de rétention, dans l'exemple illustré, il y a deux éléments de rétention **9A 9B** disposés symétriquement de part et d'autre de l'élément d'interface lorsque le celui-ci est dans sa position de rétention PR (cf figures 3A 3B).

Chacun élément de rétention est monté pivotant autour d'un axe **A8, A9** avec le(s) ressort(s) de rappel **95, 96** destiné à créer un seuil en deçà duquel l'élément de l'interface est retenu et au-delà duquel il peut être détaché c'est-à-dire ôté de l'espace de rétention **PR.**

Lorsque l'utilisateur **U** saisit le masque pour le porter à son visage, au début du mouvement, l'élément d'interface est encore dans la position de rétention, et la fourniture de gaz sous pression dans le tuyau souple n'est pas encore établie. Ainsi pendant le début de la manoeuvre, le harnais gonflable reste à l'état dégonflé (même si les oreilles **18** sont effectivement pincées) ce qui facilite l'extraction de l'ensemble du *[masque* + *harnais]* du logement. Par ailleurs, le lien souple **6** qui relie la sangle inférieure **22** à l'élément d'interface **4** prisonnier de l'élément de rétention **9** génère naturellement un déploiement du harnais lorsque l'utilisateur tire le bloc régulateur vers le haut, car la partie postérieure du harnais reste accrochée. Au-delà d'un certain effort, l'élément d'interface se détache de l'élément de rétention, et c'est seulement à ce moment que la fourniture de gaz sous pression est établie dans le tuyau souple vers le bloc régulateur. C'est ainsi que l'on diffère le gonflage du harnais au moment où celui-ci est déjà déployé naturellement par la rétention du clip. Le retard provoqué n'est toutefois pas problématique vis-à-vis de la fourniture d'oxygène dans le couvre face oronasal **14,** du fait de la petite longueur du lien **6,** le clip se détache bien avant que le couvre face puisse atteindre le visage de l'utilisateur **U.**

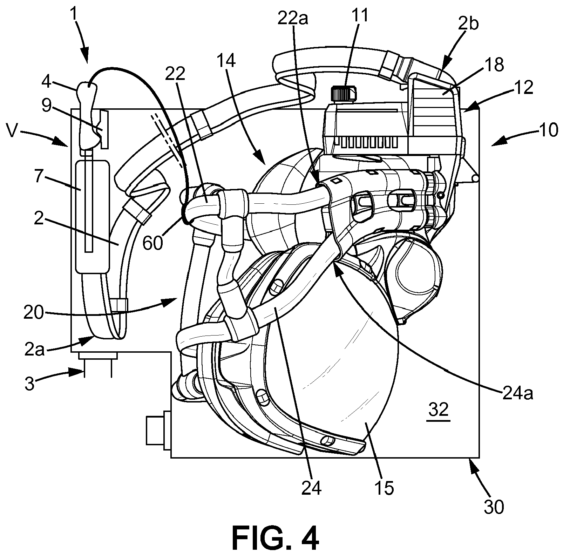

On note qu'il pourrait y avoir un seul élément de rétention **9** comme illustré schématiquement aux figures 4 et 5 et non deux éléments de rétention comme dans les cas illustrés aux figures 3A-3C, 6A-6C, 7A-7C.

Généralement, on prévoit que l'effort d'extraction du masque du logement soit de préférence compris entre 10 Newton et 50 N, voire entre 20 et 40 N.

Les formes complémentaires de l'élément d'interface **4** et de l'élément de rétention **9** sont définies pour fournir un effort de libération de l'élément d'interface **4** et donc autorise la libération complète du masque du logement de préférence compris entre 10 Newton et 50 N.

En ce qui concerne l'effort de libération de de l'élément d'interface **4** par rapport à l'élément de rétention **9**, les formes d'interface entre ces deux pièces comprennent d'une part une rampe **99** dans l'élément de rétention **9** et d'autre part dans l'élément d'interface **4** la partie arrière **49** de la tête qui assurent ensemble par coopération une fonction de clipsage grâce au mouvement possible avec rappel élastique de l'élément de rétention **9** (ou des éléments de rétention).

Optionnellement on peut prévoir que cette fonction de rétention/clipsage puisse présenter une fonction de rotule, au moins sur un angle solide minimum prédéfini. Ainsi, même si la traction n'est pas exercée strictement dans l'axe, l'effort de libération ne sera pas substantiellement modifié par le désaxement.

Les formes des zones 49,99 peuvent être conçues pour obtenir une zone conique de libération à effort homogène centrée sur l'axe X avec une ouverture par exemple supérieure ou égale à 30° (ou bien supérieur à un angle solide de l'ordre de 0,5 stéradian).

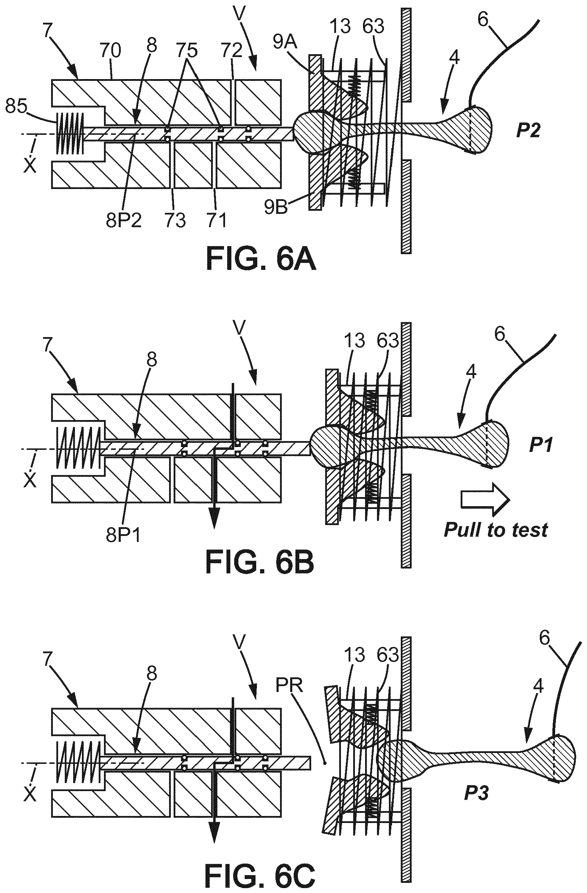

Sur les figures 6A. 6B et 6C qui illustrent un deuxième mode de réalisation, les éléments de rétention sont en appui sur un tiroir mobile **13** qui fournit une course entre la position de test **P1** et la position normale **P2.** Le tiroir mobile **13** est monté coulissant le long de l'axe X avec un rappel élastique exercé par un ressort spiral large **63**. Le tiroir mobile **13** fournit une course disponible entre la position normale de rangement position **P2** et la position de test **P1** qui est obtenu en exerçant une traction sur l'élément d'interface **4** (il s'agit d'une configuration Pull to Test, similaire à la configuration Press-to-Test déjà décrite en détails plus haut), à savoir vers la droite sur la figure, alors que le ressort 63 repousse le tiroir 13 vers la gauche.

Au-delà dans certain effort, le tiroir mobile **13** étant arrivé en butée, alors l'élément d'interface **4** s'échappe des éléments de rétention **9** (resp. 9A,9B) et autorise le gonflage du harnais pour autant que les oreilles **18** soient sollicitées par l'utilisateur **U**.

On note que les éléments non décrits à nouveau ici sont considérés comme identiques ou similaires à ceux du premier mode de réalisation.

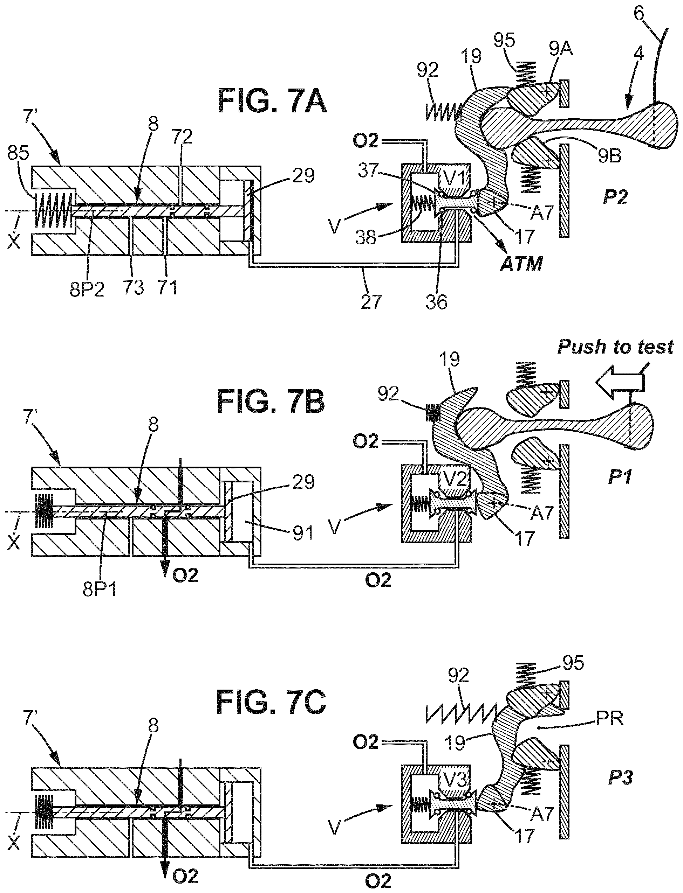

Sur les figures 7A, 7B et 7C qui illustrent un troisième mode de réalisation, la vanne pneumatique **V** commandée par les différentes positions de l'élément d'interface **4** ne commande pas directement l'ouverture du gaz respirable vers le tuyau souple, la vanne pneumatique sert simplement de capteur ; en effet ici un tuyau de commande **27** relie la vanne pneumatique V à un distributeur auxiliaire **7'** qui peut être agencé à une certaine distance ; ce distributeur auxiliaire 7' fonctionne de manière similaire à ce qui qui a été présenté pour le distributeur du premier mode ci-dessus, à savoir il commande sélectivement le passage du gaz respirable en direction du tuyau souple.

Dans cette configuration, l'élément d'interface **4** est associé à un levier basculant **19** formant une commande à came. La came est notée **17**, cette came agit sur un sélecteur pneumatique comprenant un piston **37** déplaçable entre deux positions et des joints toriques **36** d'étanchéité de préférence agencée sur les parties coniques. Une conduite pneumatique intermédiaire repérée **27** relie la vanne pneumatique V (ici de sélection) à une chambre pneumatique **91** de commande d'un distributeur auxiliaire 7' qui joue le rôle du distributeur principal comme décrit dans le deuxième mode de réalisation avec seulement deux positions. Dans le distributeur auxiliaire 7' un piston de commande **29** délimite la chambre pneumatique **91** de commande.

Dans l'exemple illustré, la came **17** pousse le piston **37** vers la gauche alors qu'un ressort de rappel noté **38** pousse le piston **37** vers la droite. La came **17** et le levier **19** sont solidaires et sont mobiles en rotation autour de l'axe noté **A7.** Le levier est rappelé dans le sens horaire par un ressort de rappel **92,** à l'encontre de l'action de l'élément d'interface **4** dont la tête **44** est reçue dans une portion convexe du levier.

Dans la position **P2**, le ressort **38** pousse à droite le piston, la conduite intermédiaire **27** est vidangée à l'atmosphère **ATM**, le piston **8** du distributeur principal est calé à droite et le tuyau souple **2** est relié à l'air libre. À l'inverse dans les deux autres positions **P1** et **P3**, à savoir la position de test et la position d'alimentation sous utilisation du masque, le piston **37** de la vanne de sélection est déplacé à gauche, ce qui provoque la mise sous pression de la conduite intermédiaire **27** et la mise en pression de la chambre pneumatique **91** et par conséquent le déplacement à gauche du piston **8** du distributeur principal 7'. Ceci provoque la fourniture d'oxygène dans le tuyau souple **2**.

On remarque que dans ce troisième mode de réalisation, il s'agit d'une configuration « *Push to Test »* comme dans le premier mode. Toutefois le distributeur **7'** peut être agencé en un endroit quelconque et notamment ailleurs que dans le prolongement de l'élément d'interface. Ainsi, le distributeur **7'** peut être situé dans le logement **32** ou en dehors.

De même on note qu'il ne serait pas exclu d'avoir l'élément de rétention agencé à proximité du logement ; dans les exemples illustrés, l'élément de rétention **9** est agencé dans le logement **32** tout comme la vanne **V.**

On remarque que dans les deux premiers modes, le distributeur pneumatique se trouve dans la zone médiane ZM d'une des parois du logement (ici celle illustrée en bas), dans le prolongement de la position de l'élément d'interface 4 lorsque celui-ci est en position dans l'élément de rétention ; toutefois, l'élément d'interface et le distributeur pourraient se trouver dans une autre position à l'intérieur du logement, par exemple sur un côté, dans un coin, notamment si le logement est dépourvu de porte(s).

On remarque que le distributeur principal peut être agencé dans la boîte de rangement 30 ou à l'extérieur de celle-ci. Aussi, le témoin visuel 5 de flux oxygène peut être agencé sur la boîte de rangement, ou bien sur une de ses portes, ou bien délocalisé.

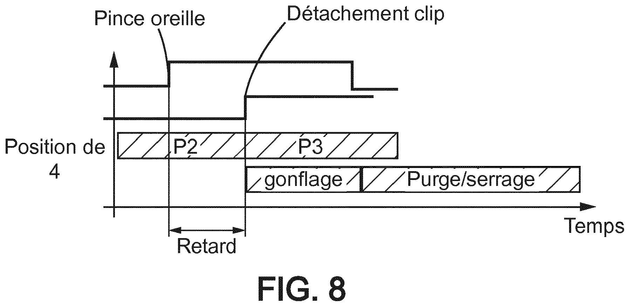

Le chronogramme de la figure 8 illustre le retard obtenu au gonflage du harnais ; en effet quand l'utilisateur saisit le masque et pince les oreilles 18, le harnais ne se gonfle pas car le circuit de gaz n'est pas encore établi ; ce n'est que lors du mouvement de déploiement que la traction du lien souple 6 entraine la libération de l'élément d'interface 4 et la fourniture de gaz. Alors seulement à ce moment le harnais se gonfle (dans de bonnes conditions, sans enchevêtrement) et autorise le passage de la tête dans le harnais (i.e. la mise en place du harnais sur la tête). Quand l'utilisateur relâche les oreilles, le harnais se rétracte sur la tête (cf Fig 2).

On remarque que dans les configurations présentées, l'ensemble du système pneumatique de fourniture de gaz respirable ne fait appel à aucun élément électrique qui pourrait venir à faire défaut en cas d'incident sur le réseau électrique de l'aéronef. Ainsi avantageusement la disponibilité de l'oxygène ne présente aucune dépendance vis-à-vis des fonctions électriques de l'aéronef.

Il est important de remarquer ici que les exemples ont été donnés avec une alimentation en gaz sous pression qui sert à la fois de vecteur de gonflage du harnais gonflable et de gaz respirable par l'utilisateur du masque.

Toutefois, il pourrait en être autrement ; il pourrait y avoir d'une part une conduite d'alimentation de gaz respirable et d'autre part une conduite de gaz sous pression, pas forcément respirable, pour la fonction de gonflage du harnais gonflable. À cet effet, on entend à la revendication principale par « *source de gaz sous pression* » un gaz permettant le gonflage du harnais gonflable et d'autre part « *alimentation de gaz respirable* » la fourniture de gaz respiratoire comprenant de l'oxygène à destination des poumons de l'utilisateur U.

## Revendications

1. Equipement respiratoire (1) pour aéronef, comprenant:
- un masque respiratoire à régulateur (10), adapté pour être appliqué, dans une position d'utilisation, autour d'un nez et d'une bouche d'un utilisateur (U),
- un harnais gonflable (20) configuré pour être raccordé à une source de gaz sous pression, et adapté pour maintenir le masque respiratoire sur l'utilisateur (U),
- un tuyau souple (2) d'alimentation en gaz raccordé au masque respiratoire (10) au niveau d'une extrémité aval (2b) pour alimenter le masque respiratoire depuis une alimentation de gaz respirable,
- un espace de rangement (30) comprenant un logement (32) adapté pour loger au moins le masque respiratoire (10) et le harnais gonflable dans une position de stockage et présentant une ouverture d'accès, le masque respiratoire (10) étant à distance du logement dans la position d'utilisation, dans lequel l'équipement respiratoire comprend un élément d'interface (4) relié au harnais gonflable, l'élément d'interface étant configuré pour coopérer avec une vanne pneumatique (V) agissant sélectivement sur l'alimentation de gaz respirable en amont du tuyau souple et l'élément d'interface étant configuré pour être retenu de manière détachable par au moins un élément de rétention (9),
et dans lequel l'élément d'interface (4) est déplaçable, tout en restant retenu par l'élément de rétention (9), entre d'une part une position de test (P1) dans laquelle l'élément d'interface (4) est sollicité par un effort exercé directement par un doigt de l'utilisateur et la vanne pneumatique cause une ouverture de l'alimentation de gaz respirable vers le tuyau souple, et d'autre part une position normale de rangement (P2), obtenue en l'absence d'effort exercé par l'utilisateur, dans laquelle la vanne pneumatique empêche la circulation du gaz respiratoire.

2. Equipement respiratoire selon la revendication 1, dans lequel il est prévu une liaison mécanique pour relier le harnais gonflable (20) à l'élément d'interface (4).

3. Equipement respiratoire selon la revendication 2, dans lequel ladite liaison mécanique est formée par un lien souple (6) de préférence non détachable.

4. Equipement respiratoire selon la revendication 3, dans lequel ledit lien souple (6) est fixé au harnais gonflable (20) soit par une pince (60), soit par une boucle fermée cousue.

5. Equipement respiratoire selon l'une des revendications 1 à 4, dans lequel, lorsque l'élément d'interface (4) est ôté d'une position de rétention (PR) où l'élément d'interface est normalement maintenu par l'élément de rétention (9) dans la position de rangement (P2) ou la position de test (P1), alors la vanne pneumatique cause une ouverture du passage de la source de gaz sous pression vers le harnais gonflable et/ou cause une ouverture de l'alimentation de gaz respirable vers le tuyau souple.

6. Equipement respiratoire selon l'une des revendications 1 à 5, dans lequel la source de gaz sous pression du harnais gonflable est formée par l'alimentation en gaz respirable amené par le tuyau souple.

7. Equipement respiratoire selon l'une des revendications 1 à 6, dans lequel la vanne pneumatique (V) fait partie d'un distributeur (7) relié au tube d'alimentation en gaz (2) et l'élément d'interface (4) est configuré pour coopérer avec un piston (8) dudit distributeur (7).

8. Equipement respiratoire selon la revendication 7, dans lequel le piston est déplaçable selon un axe longitudinal entre une première position dite position de test (8P1) correspondant à la position de test (P1) de l'élément d'interface, une deuxième position (8P2) dite de circuit fermé correspondant à la position normale de rangement (P2) de l'élément d'interface, et une troisième position (8P3) dite de circuit établi correspondant à une position otée (P3) de l'élément d'interface.

9. Equipement respiratoire selon la revendication 7, dans lequel le piston est déplaçable selon un axe longitudinal entre une première position dite position de test (8P1,8P3) correspondant à la position de test (P1) de l'élément d'interface, qui sert aussi de position de circuit établi correspondant à une position otée (P3) de l'élément d'interface, et une deuxième position (8P2) dite de circuit fermé correspondant à la position normale de rangement (P2) de l'élément d'interface.

10. Equipement respiratoire selon l'une des revendications 7 à 9, dans lequel le piston est sollicité au moins vers la deuxième position, soit par un élément élastique (85), soit par la pression du gaz respiratoire.

11. Equipement respiratoire selon l'une des revendications 1 à 10, dans lequel la liaison mécanique entre l'élément de rétention (9) et l'élément d'interface (4) est une liaison à effet rotule.

12. Equipement respiratoire selon l'une des revendications 1 à 11, dans lequel le distributeur pneumatique se trouve dans la zone médiane (ZM) d'une des parois du logement, de préférence dans le prolongement de la position de l'élément d'interface (4) lorsque celui-ci est en position dans l'élément de rétention.

13. Equipement respiratoire selon l'une des revendications 1 à 12, dans lequel l'élément d'interface (4) est relié de manière non démontable sur la partie postérieure inférieure du harnais, au moyen d'un lien souple (6).

14. Equipement respiratoire selon la revendication 7, dans lequel le lien souple (6) présente une longueur inférieure à 10cm.
